# EUROPÄISCHE PATENTSCHRIFT

(11) **EP 0 831 269 B1**
(45) Veröffentlichungstag und Bekanntmachung des Hinweises auf die Patenterteilung: **10.09.2003**
(21) Anmeldenummer: 97115991.8
(22) Anmeldetag: 15.09.1997
(51) Int. Cl.: F16M 1/00, G02B 26/10

(54) **Kippvorrichtung**
Tilting device
Dispositif de basculement

(30) Priorität: 19.09.1996 DE 19638213; 17.01.1997 DE 19701485
(43) Veröffentlichungstag der Anmeldung: 25.03.1998
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Stacklies, Horst, 73431 Aalen (DE); Pommerening, Steffen, 74078 Heilbronn (DE); Schweizer, Bruno, 73447 Oberkochen (DE); Schweizer, Jürgen, Dr., 73463 Westerhofen (DE)

(56) Entgegenhaltungen:
- DE-A- 19 504 568
- US-A- 3 946 166
- US-A- 4 021 096
- US-A- 4 175 832
- US-A- 4 854 687

## Beschreibung

Die Erfindung betrifft eine Kippvorrichtung gemäß dem Oberbegriff des Anspruchs 1.

Kippvorrichtungen sind aus dem Stand der Technik reichlich bekannt. Sie dienen dazu, einen auf sie auffallenden Lichtstrahl definiert um einen gewissen Winkel abzulenken. Man unterscheidet insbesondere 1-achsige und 2-achsige Kippspiegel.

Während einachsige Kippspiegel heute ein marktübliches Produkt mit großer technischer Variation sind, sind zweiachsige Kippspiegel, welche heute zwar ebenfalls Stand der Technik und auf dem Markt erhältlich sind, noch bedeutenden technischen Einschränkungen unterworfen. Diese Einschränkungen sind insbesondere:
- begrenzter Kippwinkel um die x- bzw. y-Achse um normalerweise einen Winkel kleiner als 1°;
- eingeschränkte Baugröße (Dabei erfordern gewisse Kippwinkel eine gewisse Mindestbaugröße oder auch maximale Baugröße, was jeweils störend ist.);
- Baugröße der Kippspiegelanordnung deutlich größer als Spiegelfläche, insbesondere hinter der Spiegelfläche bei kleinen Kippspiegeln (d.h. mit den Spiegeln nach dem bekannten Stand der Technik sind keine hohen Packungsdichten erreichbar); oder
- komplizierte Herstellungstechnik der bekannten zweiachsigen Kippspiegel.

Aus der US-PS 4,708,420 ist eine Kippspiegelanordnung bekannt, welche zum Scannen verwendet wird. Dabei ist der Scan-Spiegel über Biegegelenke mit piezokeramischen Antriebselementen verbunden, welche parallel zur Spiegeloberfläche angeordnet sind. Damit die piezokeramischen Antriebselemente den Spiegel um einen großen Winkel kippen können, muß diese Anordnung sehr groß sein. Dies resultiert aus der geringen Verbiegung der piezokeramischen Antriebselemente, welche proportional zur Länge dieser Elemente ist. Damit ist diese Anordnung nicht dazu geeignet, kleine Spiegel um einen großen Winkelbereich zu kippen, wenn der Antriebsmechanismus hinter dem Kippspiegel auf die Dimension der Spiegelfläche begrenzt sein soll.

Aus der US-PS 4,383,763 ist eine Kippspiegelanordnung bekannt, bei welchem der Spiegel auf einem Kipp-Punkt gelagert ist und über piezoelektrische Keramiken bewegt wird. Auch hier müssen die Dimensionen des Spiegels sehr groß sein, wenn der Kippspiegel um mindestens 1° gekippt werden soll.

Aus der US-PS 4,660,941 ist eine Kippspiegelhalterung bekannt, bei welchem die Kippspiegelbewegung durch piezoelektrische Elemente erreicht wird und die piezoelektrischen Elemente wirken dabei über Hebel auf den Spiegel. Auch diese Anordnung ist nicht dazu geeignet, einen kleinen Spiegel um mindestens 1° zu kippen.

Aus der US-PS 5,170,277 ist ein piezoelektrischer Strahlreflektor bekannt, bei welchem der Spiegelkörper direkt auf dem piezoelektrischen Element befestigt ist. Dies hat den Nachteil, daß der Spiegel bei einer Kippung keinen definierten Drehpunkt besitzt.

Aus der US-PS 4,691,212 ist ein piezoelektrischer Strahlreflektor bekannt, welcher in einer Scananordnung verwendet wird. Der Nachteil dieser Anordnung ist, daß ein bestimmter Ablenkwinkel nicht starr gehalten werden kann, wenn der Drehpunkt fest liegen soll.

Aus der DE 195 19 161 ist eine piezoelektrische Abtastvorrichtung bekannt, bei welcher ein Paar von piezoelektrischen Plattenelementen, die sich transversal zu einer Basis erstrecken, an einem Ende auf ein Aufbauelement gemeinsam so einwirken, daß dieses Aufbauelement kippt. Es sind somit für eine Kippachse zwei sich zusammen bewegende Plattenelemente notwendig, welche sich zur Kippung entgegengesetzt bewegen müssen. Die Plattenelemente greifen dazu an unterschiedlichen Stellen eines Stabes unterhalb des Aufbauelementes an. Für eine Kippung um eine dazu senkrechte Kippachse sind zwei weitere Plattenelemente notwendig.

Aus der US-PS 3,946,166 ist eine Kippspiegelanordnung nach dem Oberbegriff des Anspruches 1 bekannt. Zur Vorspannung des Lagers zwischen dem Basiskörper und dem Kippkörper weisen der Basiskörper und der Kippkörper jeweils einen Ringmagneten auf. Aufgrund der rotationssymmetrischen Magnetfelder sind bei dieser Anordnung die Kippachsen nur durch die Antriebsrichtungen definiert.

Es ist die Aufgabe der Erfindung, eine Kippvorrichtung nach dem Oberbegriff des Anspruches 1 zu schaffen, bei welcher neben einer magnetischen Vorspannung des Lagers der Kippkörper gegen eine Verdrehung um eine Achse geschützt ist.

Diese Aufgabe wird erfindungsgemäß durch eine Kippvorrichtung mit den Merkmalen des Anspruches 1 gelöst. Vorteilhafte Ausgestaltungen der Erfindung ergeben sich aus den Merkmalen der abhängigen Ansprüche.

Die erfindungsgemäße Kippvorrichtung ermöglicht eine Kippung um mindestens eine Achse und verwendet einen Kippkörper, einen Basiskörper und eine zwischen diesen beiden Körpern liegenden Lagerung. Dabei liegt der Schwerpunkt des Kippkörpers im Drehpunkt der Lagerung.

Um keine Schwingungen im System zu haben und um eine einfach herzustellende Kippvorrichtung zu erhalten, ist es vorteilhaft, wenn bei einer Kippbewegung lediglich der Kippkörper mit den an ihm befestigten Teilen bewegt wird.

Es ist vorteilhaft, wenn zur Lagerung vier runde Lagerkörper verwendet werden. Unterhalb des Kippkörpers können dabei achssymmetrisch drei der Lagerkörper in einer Ebene angeordnet sein und auf dem Basiskörper zentral eine Kugel. Lagert man die eine Kugel in den drei anderen Lagerkörpern, so erhält man eine stabile sichere Lagerung. Der zentrale Lagerkörper muß eine Kugel sein, während die drei anderen Lagerkörper Kugeln oder Rundzylinder sein können.

Da die Lagerung zwischen dem Basiskörper mit dem Kippkörper magnetisch vorgespannt ist, ist gewährleistet, daß sich bei einer Schräglage der Kippvorrichtung die beiden Körper nicht durch den Einfluß der Schwerkraft voneinander trennen.

Es ist vorteilhaft, wenn in der Kippvorrichtung eine Antriebsvorrichtung eingebaut ist. Dies ist insbesondere dann der Fall, wenn man von der Kippvorrichtung kontrollierte Bewegungen erwartet (z.B. für eine Lichtstrahlablenkung, eine Bewegung eines auf der Kippvorrichtung angebrachten Lasers, usw.). Die Antriebsvorrichtung für eine Achse ist dabei vorteilhafter weise aus einer Spule am Basiskörper und einem Magneten am Kippkörper aufgebaut. Dabei ist es vorteilhaft, wenn der Magnet ein Dauermagnet ist.

Zur genauen Ermittlung der Kippung ist es vorteilhaft, wenn in der Kippvorrichtung selbst ein Positionsmeßsystem enthalten ist. Dieses Positionsmeßsystem kann vorteilhafterweise aus mindestens einem Hallsensor und mindestens einem Dauermagnet aufgebaut sein. Dabei ist es vorteilhaft, wenn der Dauermagnet am Kippkörper befestigt ist.

Die erfindungsgemäße Kippvorrichtung eignet sich für alle Anwendungen, bei welchen es zumindest auf eine einachsige Bewegung über einen relativ kleinen, jedoch 1° überschreitenden, Kippwinkel (< 10°, vorteilhafterweise < 5°) bei relativ hohen Kippfrequenzen ankommt. Die Anwendungen umfassen Abtastungen, Belichtungen, Materialabtragungen, usw..

Insbesondere kann man mit der erfindungsgemäßen Kippvorrichtung große Segmentarrays aufbauen, welche aus einer flächenhaften Anordnung von vielen der erfindungsgemäßen Kippvorrichtung bestehen, da der Antriebsmechanismus vollständig unterhalb der zu kippenden Fläche angeordnet ist.

Auf der zu kippenden Fläche können dabei sowohl passive Bauteile (z.B. Spiegelflächen, usw.) als auch aktive Bauteile (z.B. Laserdioden) angeordnet sein.

Die Erfindung wird im folgenden in beispielhafter Weise anhand von Zeichnungen erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen:
- Figur 1: die erfindungsgemäße Kippvorrichtung in einem seitlichen Teilschnitt;
- Figur 1a: einen Schnitt in der in Figur 1 angegebenen Ebene Ia;
- Figur 2: die erfindungsgemäße Kippvorrichtung aus Figur 1 in einem weiteren seitlichen Teilschnitt, welcher senkrecht zum seitlichen Teilschnitt aus der Figur 1 steht;
- Figur 2a: einen Schnitt in der in Fig. 2 angegebenen Ebene IIa;
- Figur 3a: das Sensorsystem in seitlicher Ansicht; und
- Figur 3b: das Sensorsystem aus Figur 3a in Aufsicht.

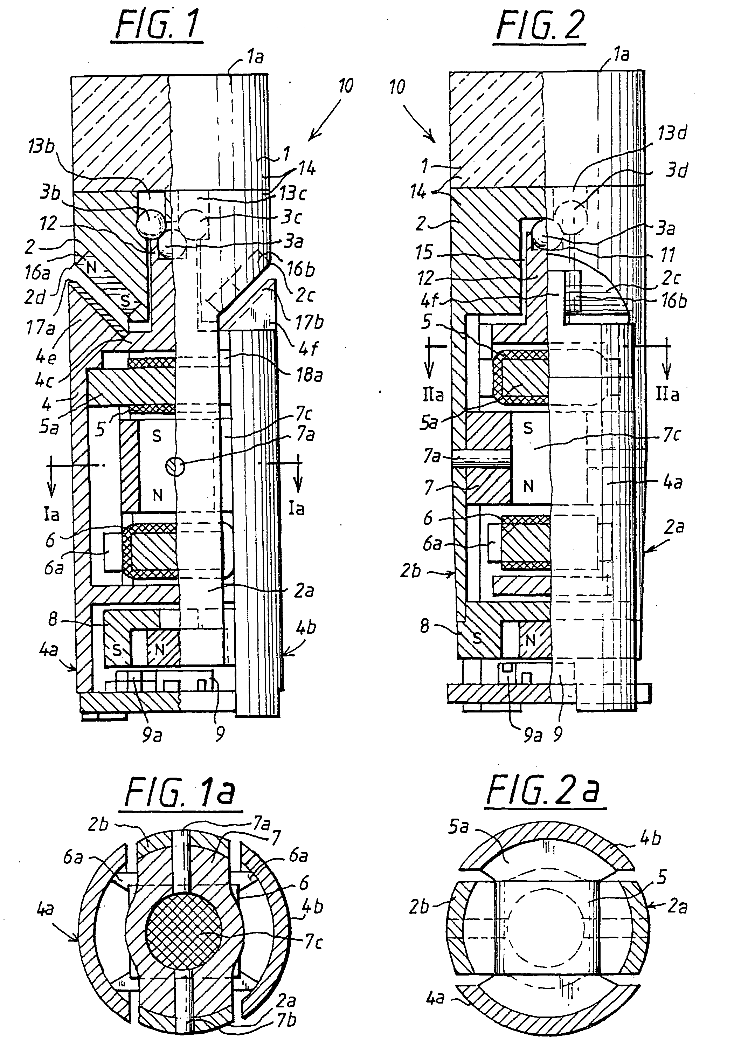

Die in der Figur 1 und 2 dargestellte Kippvorrichtung (10) ist beispielhaft als ein Kippspiegel mit Sensorsystem (9a) ausgeführt. Die dargestellte Kippvorrichtung (10) besteht im wesentlichen aus einem oberen Kippkörper (14), welcher sich relativ zu einem unteren Basiskörper (4) um einen vorher konstruktiv festgelegten Betrag schräg stellen kann. Zwischen diesen beiden Körpern (4, 14) befindet sich eine Lagerung (3a, 3b, 3c, 3d).

Die Lagerung (3a, 3b, 3c, 3d) zwischen dem oberen Kippkörper (14) und dem unteren Basiskörper (4) erfolgt über vier Lagerkugeln (3a, 3b, 3c, 3d), wobei eine Lagerkugel (3a) fest mit einer dazu vorgesehenen Aufnahme (11) auf einer zylinderförmigen Erhebung (12) im oberen Teil des Basiskörpers (4) verbunden ist und die drei anderen Lagerkugeln (3a, 3b, 3c) sich auf ihr gleitend bewegen können. Die zylinderförmige Erhebung (12) im oberen Teil des Basiskörper (4) ragt dabei weit in die größere Öffnung (15) im unteren Teil (2) des Kippkörpers (14) hinein.

Für die drei oberen Lagerungskugeln (3a, 3b, 3c) sind entsprechende Aufnahmen (13b, 13c, 13d) im unteren Teil (2) des Kippkörpers (14) in einer dazu vorgesehenen größeren Öffnung (15) angebracht, in welchen die drei oberen Lagerungskugeln (3a, 3b, 3c) befestigt sind.

Durch die exakte Kugelform und die drei Auflagepunkte der oberen Lagerkugeln (3a, 3b, 3c) auf der unteren Lagerkugel (3a) ist somit für alle Achsen derselbe, feste Drehpunkt im Mittelpunkt der unteren Lagerkugel (3a) vorgegeben.

Damit die Kippvorrichtung (10) in jeder beliebigen räumlichen Lage (damit ist die räumliche Lage bzw. Orientierung des Basiskörpers gemeint) verwendet werden kann, liegt der Schwerpunkt des Kippkörpers (14) und der mit ihm starr verbundenen Teile im Drehpunkt.

Der bewegliche Kippkörper (14) hat nach unten hin, ebenso wie die festen Teile (4a und 4b) des Basiskörpers (4), die Form einer geschlitzten Rohrhülse (siehe Figur 1 und 2). Im oberen Teil (1) des Kippkörper (14) besitzt dieser einen Spiegelkörper (1) mit verspiegelter Oberfläche (1a), welcher fest mit dem unter dem Spiegelkörper (1) angebrachten Lagerungskörper (2) des Kippkörpers (14) verbunden ist (z.B. angeklebt).

An diesem Lagerungskörper (2) erstrecken sich zwei seitliche relativ dünne Schürzenkörper (2a, 2b) seitlich nach unten, welche als Befestigungskörper für einen an ihnen fest angebrachten ersten Magnethalter (7) aus Titan dienen. In diesem Magnethalter (7) ist ein Permanentmagnet (7c) so gehalten, daß seine magnetischen Pole (Nord- und Süd-Pol) zu den beiden Spulen (5, 6) hin weisen. Durch die rohrhülsenförmige Form des Kippkörpers (14) im seinem unteren Teil ist es möglich, den ersten Dauermagneten (7c), welcher Teil des zweiachsigen Antriebssystems ist, zwischen den beiden feststehenden Spulen (5, 6) am Basiskörper (4) anzubringen. Zur Fixierung des Magnethalters (7) mit dem Permanentmagneten (7c) des Antriebssystems an dem Schürzenkörper (2a, 2b) ist jeweils zu beiden Seiten ein Stift (7a, 7b) in jeweils einer Öffnung des Schürzenkörpers (2a, 2b) und des Magnethalters (7) angebracht, wobei dieser Stift (7a, 7b) in den beiden Öffnungen eingeklebt ist. Selbstverständlich wäre aber auch jede andere Art der sicheren Befestigung an dieser Stelle anwendbar.

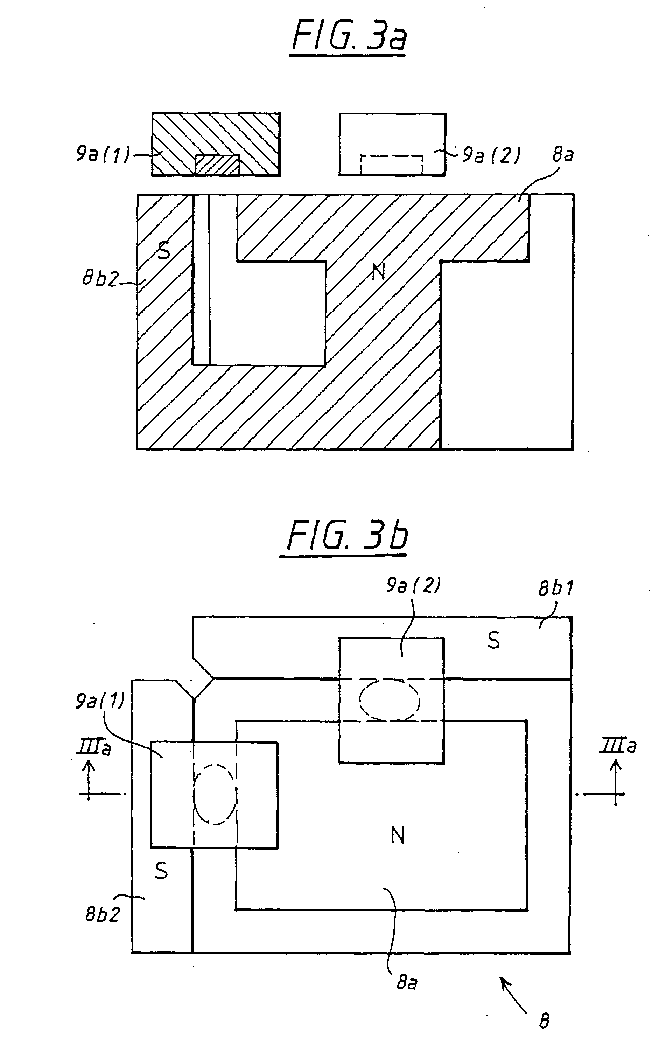

Am Ende der Schürzenkörper (2a, 2b) ist ein zweiter Dauermagnet (8) angebracht (siehe auch Figuren 3a und 3b), wobei die Anbringung durch eine Verklebung der beiden Körper (2a, 2b; 8) miteinander erfolgt. Auch hier ermöglicht es die hülsenförmige Gestalt des Kippkörpers (14) in seinem unteren Bereich, den zweiten Dauermagneten (8), welcher einen Teil des Sensorsystems (siehe Figuren 3a und 3b) darstellt, am beweglichen Kippkörper (14) fest anzubringen (z.B. anzukleben).

In dem in den Figuren 1 und 2 dargestellten Beispiel liegt der magnetische Nordpol des Magneten unten, und die Schürzenkörper (2a, 2b) des Kippkörpers (14) sind in dieser Nord-Süd-Erstreckungsrichtung angeordnet. In der Figur 1a ist die genaue Form des oberen Dauermagneten (7c) nochmals deutlich dargestellt. Der Dauermagnet (7c) wird von einem Magnetträger (7) gehalten, welcher eine im wesentlichen zylinderrohrförmige Gestalt mit unterschiedlichen Wanddicken mit einer kreisrunden mittleren Öffnung zur Aufnahme des Permanentmagneten (7c) besitzt.

Der Lagerungskörper (2) besitzt in seinem unteren Teil zwei schräge Flächen (2c, 2d), welche nach schräg oben geneigt sind und sich jeweils auf den gegenüberliegenden Seiten des Lagerungskörpers (2) befinden. In diesen Schrägflächen (2c, 2d) befindet sich jeweils eine Ausnehmung, in welche jeweils ein Dauermagnet (16a, 16b) eingelassen ist. Diese zwei Dauermagnete (16a, 16b) wirken mit zwei schräg angeordneten weichmagnetischen Platten (17a, 17b) im oberen Teil des Basiskörpers (4), welchen sie exakt gegenüberliegen, derart zusammen, daß der Kippkörper (14) und der Basiskörper (4) zueinander magnetisch vorgespannt sind und die vier Lagerungskugeln (3a, 3b, 3c, 3d) aufeinandergepreßt werden. Dadurch ist sichergestellt, daß der bewegliche Kippkörper (14) mit seinen drei Lagerungskugeln (3b, 3c, 3d) auf der Lagerungskugel (3a) des Basiskörpers (4) aufliegt und außerdem ein zusätzlicher Schutz der Kippvorrichtung (10) vor einem Verdrehen um die z-Achse (zwei rotatorische Freiheitsgrade) vorhanden ist.

Der Basiskörper (4) ist im wesentlichen ein Hohlzylinderkörper, welcher zu beiden Seiten Ausnehmungen (18a), (18b in der Figur nicht dargestellt) zur Aufnahme der Schürzenkörper (2a, 2b) des Kippkörpers (14) besitzt. Am oberen Ende des Basiskörpers (4) besitzt er eine obere Verschlußkappe (4c), aus welcher in der Mittelachse die zylinderförmigen Erhebung (12) mit ihrer Aufnahme (11) für die Lagerkugel (3a) hervorragt. Seitlich von dieser Erhebung (12) sind im äußeren Bereich der oberen Verschlußkappe (4c) zwei sich gegenüberliegende schräg nach oben verlaufende Aufsätze (4e, 4f) vorhanden, deren Schräge mit der Schräge der korrespondierenden gegenüberliegenden Schrägflächen (2c, 2d) an dem Kippkörper (14) im nicht ausgelenkten Zustand der Kippvorrichtung (10) parallel verläuft.

Die zwei Dauermagnete (16a, 16b), welche mit den zwei schräg angeordneten Platten (17a, 17b) im oberen Teil des Basiskörpers (4) zusammenwirken und den Kippkörper (14) gegen den Basiskörper (4) magnetisch vorspannen (so daß die vier Lagerungskugeln (3a, 3b, 3c, 3d) aufeinandergepreßt werden), reichen je nach geforderter Anwendung des Kippspiegels manchmal nicht aus. Dies betrifft insbesondere die Stabilität der Lagerung, da diese zu schwach sein kann, und ein, wenn auch geringes, Verdrehen des Kippkörpers (14) um die z-Achse zulassen könnte.

Das kann aber leicht behoben werden, wenn man die beiden Dauermagnete (16a, 16b) durch mindestens drei, vorteilhafterweise vier Dauermagnete (es können aber auch mehr Magnete sein) ersetzt, welche vorteilhafterweise in gleichem Abstand zueinander angeordnet sind. Auf jeden Fall müssen die Dauermagnete dann so angeordnet sein, daß sie nicht alle auf einer Linie liegen, sondern eine Fläche aufspannen (dabei müssen die Magnete nicht quadratisch angeordnet sein, sondern lediglich in einem Dreieck, Rechteck, bzw. Vieleck, wobei die Abstände der Magnete zueinander nicht gleich sein müssen).

Während zwei Dauermagnete (16a, 16b), wie im Beispiel dargestellt, nur um eine Achse stabilisieren können (dazu sollten sie schmal sein), ist eine gute Stabilisierung um zwei Achsen erst mit mindestens drei Magneten möglich. Mit zunehmender Anzahl der Magnete wird die Stabilität gegen Verdrehung um die z-Achse immer besser.

Die Schrägflächen (17a, 17b) auf dem Basiskörper (4) bestehen aus einem magnetischen Material (z.B. Weicheisen) und sorgen zusammen mit den Dauermagneten (16a, 16b) des Kippkörpers (14) für eine magnetische Vorspannung zwischen Basiskörper (4) und Kippkörper (14). Beide magnetischen Pole der Dauermagneten (16a, 16b) liegen den Schrägflächen (17a, 17b) gegenüber, so daß sich durch den dadurch erreichbaren magnetischen Schluß eine größere Haltekraft ergibt.

Unterhalb der Verschlußkappe (4c) des Basiskörpers (4) befindet sich ein Haltesteg (5a) (vorzugsweise aus einem magnetisierbaren Material wie z.B. Weicheisen), um welchen die Windungen einer ersten Spule (5) gewickelt sind. Diese erste Spule (5) liegt in der Kippvorrichtung (10) oberhalb des am Kippkörper (14) befestigten ersten Dauermagneten (7c) und dient zusammen mit diesem Dauermagneten (7c) als Antriebseinrichtung zur einachsigen Relativverstellung zwischen Basiskörper (4) und Kippkörper (14). Ihre Wicklungen sind senkrecht zur Nord-Süd-Achse des Magneten (7c) orientiert.

Unterhalb des Dauermagneten (7c) am Kippkörper (14) befindet sich ein weiterer Haltesteg (6a) (vorzugsweise aus einem magnetisierbaren Material wie z.B. Weicheisen), um welchen die Wicklungen einer zweiten Spule (6) quer zur ersten gewickelt sind. Diese Spule (6) dient zusammen mit dem Dauermagneten (7c) als Antriebseinrichtung zur zweiten einachsigen Relativverstellung zwischen Basiskörper (4) und Kippkörper (14). Auch ihre Wicklungen sind senkrecht zur Nord-Süd-Achse des Magneten (7c) orientiert, sind aber zusätzlich senkrecht zu den Wicklungen der ersten Spule (5) orientiert. Man kann auch sagen, daß beide Spulen (5, 6) (hinsichtlich ihrer Wickelrichtungen) quer zueinander orientiert sind.

Da die Windungen der ersten Spule (5) senkrecht auf den Windungen der zweiten Spule (6) stehen, ergibt sich bei einem Stromfluß durch die erste Spule (5) z.B. eine Drehung um die x-Achse, während ein Stromfluß in der zweiten Spule (6) eine Drehung um die dazu senkrecht stehende y-Achse bewirkt. Ein gleichzeitiger Stromfluß durch beide Spulen (5, 6) bewirkt somit eine Bewegung des Kippkörpers (14) um die x- und gleichzeitig um die y-Achse.

Im unteren Teil des Basiskörpers (4) unterhalb des zweiten Dauermagneten (8) an den Schürzenkörpern (2a, 2b) befindet sich eine untere Verschlußkappe (4d), auf welcher eine Platine (9) mit elektronischen Bauteilen (9a) angebracht ist, welche zu einem Sensorsystem gehören (siehe auch Figuren 3a und 3b).

Wird auf eine oder beide Spulen (5, 6) Strom gegeben, so wirkt im Magnetfeld des Dauermagneten (7c) auf die elektrischen Leiter eine Kraft (senkrecht zum Magnetfeld und zur Stromrichtung). Durch diese Kraft wird nun, da die Spulen (5, 6) fest mit dem Basiskörper (4) verbunden sind, der Dauermagnet (7c) abgelenkt. Dadurch bewegen sich auch alle mit ihm verbundenen Teile in einer um den Drehpunkt sphärisch verlaufenden Fläche, d.h. auch der Kippkörper (14). Durch diese Bewegung wird die verspiegelte Oberfläche (1a) auf dem Spiegelkörper (1) um den jeweiligen gewünschten Winkel um die x-, oder y-Achse oder um beide Achsen gleichzeitig gekippt.

Da alle oben beschriebenen Teile fest mit dem Kippkörper (14) verbunden sind, besitzt die erfindungsgemäße Kippvorrichtung nur ein in sich starres bewegtes Teil (14), welches sich relativ zu einem anderen starren Teil (4) bewegen kann. Sämtliche Teile des Lagerungssystems, des Antriebssystems und des Positionsmeßsystems sind starr an diesen beiden Teilen befestigt und führen selber keine Eigenbewegungen aus.

Es versteht sich selbstredend, daß alle Dimensionierungen für einzelne Bauteile der Kippvorrichtung (10) so sein müssen, daß im gewünschten Auslenkwinkelbereich eine freie Bewegung des Kippkörpers (14) relativ zur Basis (4) sichergestellt ist und keines der Bauteile des Kippkörpers (14) gegen Bauteile des Basiskörpers (4) stößt. Außerdem ist bei der Dimensionierung der Antriebssysteme (Spulen (5, 6) und Dauermagnet (7c)) darauf zu achten, daß sie die zur Verstellung benötigten Kräfte erzeugen können. Bei der Auswahl der Bauteile für das Positionsmeßsystem muß darauf geachtet werden, daß die ausgewählten Positionsmeßsensoren die erforderliche Meßgenauigkeit und Auflösung haben.

Das Sensorsystem dient der genauen Positionsbestimmung der Kippvorrichtung (10). In dem hier dargestellten Beispiel sind auf der Platine (9) mehrere (zumindest ein Sensor (9a) für jede Kippachse) Hallsensoren (9a) angebracht, welche je nach Kippwinkel des Kippkörpers (14) relativ zum Basiskörper (4) eine andere Spannung abgeben. Die Hallsensoren (9a) werten dabei die Richtung des Magnetfeldes des Dauermagneten (8) aus. Die Form des Dauermagneten (8) des Sensorsystems ist insbesondere aus den Figuren 3a und 3b ersichtlich. Der Dauermagnet (8) ist so konstruiert, daß er einen relativ großen quadratischen Nordpol (8a) aus einem geeigneten Material hat, welcher so groß ist, daß bei maximal zulässiger Auslenkung des Kippkörpers (14) der Hallsensor (9a(1), 9a(2)) einer Kippachse niemals bis zur Mitte des magnetischen Nordpolkörpers (8a) gelangt. Der magnetische Südpol ist seitlich so ausgebildet, daß sich zwischen der Oberfläche des magnetischen Nordpolteils (8a') und des magnetischen Südpolteils (8b1', 8b2') jeweils ein Spalt ergibt. Genau oberhalb dieser beiden Spalte (deren Orientierung senkrecht zueinander ist) sind die beiden Hallsensoren (9a(1), 9a(2)) angeordnet. Die Hallsensoren (9a(1), 9a(2)) haben dadurch eine maximale Empfindlichkeit für Kippbewegungen des Kippkörpers (14), an welchem der Dauermagnet (8) angebracht ist.

Das Sensorsystem besitzt eine Signalleitung zu einem Rechnersystem bzw. zu einem Regelungssystem für den Spulenstrom der beiden Spulen (5, 6), so daß bei einer Abweichung der Lage des Kippkörpers (14) relativ zu einer gewünschten Lage die Ansteuerungen der Spulen (5, 6) so lange nachgeregelt werden, bis der Kippkörper (10) die gewünschte Lage eingenommen hat.

Die beiden Spulen (5, 6) sowie die mit den Hallsensoren (9a) bestückte Platine (9) werden an den feststehenden Teilen (4a, 4b) des Basiskörpers (4) starr befestigt (z.B. eingeklebt), bevor man die äußeren Teile (4a, 4b) des Basiskörpers (4) an diesem starr befestigt (z.B. Verklebung bei der Montage).

Die Erfindung betrifft eine Kippvorrichtung, welche mehreren wünschenswerten Anforderungen entspricht. Diese Anforderungen lassen sich wie folgt auflisten:
- Der mögliche Kippwinkel in einer oder zwei zueinander senkrecht angeordneten Achsen beträgt ± 3° und mehr, wenigstes jedoch 1,5°.
- Der Querschnitt der Kippvorrichtung (10) ist nicht größer als die Spiegelfläche (1a), so daß mehrere Einzelspiegel nebeneinander gesetzt werden können, um z.B. einen räumlich gekrümmten Segmentspiegel aus vielen der oben beschriebenen Kippvorrichtungen (10) bauen zu können. Dies ist bei kleinen Kippwinkeln < 10° hier immer möglich.
- Der Preis liegt weit unter dem handelsüblicher Kippvorrichtungen (> 1.000.- DM), weil mit einer geringen Anzahl von leicht herzustellenden Bauteilen mit schnellen Montagetechniken gearbeitet wird.
- Die Kippvorrichtung (10) ist regelbar, was durch die Sensoren (9a) zur Ortsbestimmung sichergestellt ist.
- Die Funktion ist in jeder räumlichen Lage gewährleistet, was durch das Zusammenfallen von Drehpunkt und Schwerpunkt des Kippkörpers (14) sichergestellt ist.
- Kleiner Energieverbrauch, so daß die Leistung bei mehreren zu einem Array zusammengesetzten Kippvorrichtungen nicht zu hoch wird. Auch hier ist das Zusammenfallen von Drehpunkt und Schwerpunkt vorteilhaft.
- Aufbau der Kippvorrichtung (10) ist möglichst schwingungsfrei, so daß sich Regelkreise nicht aufschaukeln können.
- Aufbau der Kippvorrichtung ist möglichst einfach, so daß Serienfertigung möglich ist.

Das bevorzugte Einsatzgebiet der Kippvorrichtung ist die Verwendung als Kippspiegel. Diese können ein- oder zweiachsig sein. Wenngleich auf dem Markt zur Zeit ein- und zweiachsige Kippspiegel erhältlich sind, so haben sie doch den Nachteil, daß sie eine oder mehrere der oben genannten Forderungen nicht erfüllen können.

Die erfindungsgemäße Kippvorrichtung kann insbesondere als kleiner zweiachsiger Kippspiegel eingesetzt werden, dessen Baugröße in Spiegelebene nicht größer als der Spiegel selber ist, wobei die Spiegelfläche (1a) typisch ein Kreis von 3-12 mm Durchmesser ist. Dabei werden in zwei zueinander senkrecht stehenden Achsen eine Kippbewegung von mindestens ± 1,5° bis 3° erreicht, wobei die Winkelauflösung innerhalb ungefähr des halben möglichen Kippwinkelbereichs 2048 Einzelschritte erreicht (± 0,8° bei Kippwinkel ± 1,5°). Um die Kippvorrichtung regeln zu können, ist ein fest eingebautes Sensorsystem (9) vorhanden, das die Ist-Position des Kippkörpers (14) relativ zum Basiskörper (4) ermittelt. Die Kippvorrichtung (10) ist als Modul aufgebaut, um aus mehreren Modulen einen segmentierten größeren Spiegel zusammensetzen zu können. Außerdem ist die Kippvorrichtung (14) zur preiswerten Massenproduktion geeignet.

## Patentansprüche

1. Kippvorrichtung, welche eine Kippung um mindestens eine Achse ermöglicht, mit einem Kippkörper (14), einem Basiskörper (4) und einer zwischen diesen beiden Körpern liegenden Lagerung (3a, 3b, 3c, 3d), wobei der Schwerpunkt des Kippkörpers (14) im Drehpunkt der Lagerung liegt, und wobei der Kippkörper (14) und der Basiskörper (4) magnetisch vorgespannt sind, **dadurch gekennzeichnet, daß** der Kippkörper mindestens zwei Schrägflächen mit eingelassenen Dauermagneten aufweist, die mit an Schrägflächen des Basiskörpers (4) vorgesehenen, weichmagnetischen Platten (17a, 17b) zur Vorspannung der Lagerung zusammenwirken und so angeordnet sind, daß eine Verdrehung um die zur mindestens einen Kippachse senkrechten Z-Achse verhindert wird.

2. Kippvorrichtung nach Anspruch 1, **dadurch gekennzeichnet, daß** der Basiskörper (4) als geschlitzte Rohrhülse ausgebildet ist, daß der Kippkörper (14) zwei Schürzenkörper (2a, 2b) aufweist, die in die Schlitze der Rohrhülse des Basiskörpers (4) hineinragen, und daß eine Antriebseinrichtung einen an den Schürzenkörpern (2a, 2b) angebrachten Magneten (7c) aufweist.

3. Kippvorrichtung nach Anspruch 2, **dadurch gekennzeichnet, daß** der Magnet (7c) ein Dauermagnet ist

4. Kippvorrichtung nach Anspruch 3, **dadurch gekennzeichnet, daß** als Antriebsvorrichtung am Basiskörper (4) eine Spule (5) vorgesehen ist.

5. Kippvorrichtung nach einem der Ansprüche 1-4, **dadurch gekennzeichnet, daß** zur Lagerung des Kippkörpers (14) daran zentral drei Kugeln (3b, 3c, 3d) in einer Ebene angeordnet sind, daß auf dem Basiskörper (4) zentral eine Kugel (3a) angeordnet ist und daß die Kugel (3a) des Basiskörpers (4) durch die Kugeln (3b, 3c, 3d) des Kippkörpers (14) gelagert ist

6. Kippvorrichtung nach einem der Ansprüche 1 - 4, **dadurch gekennzeichnet, daß** zur Lagerung des Kippkörpers (14) daran zentral eine Kugel angeordnet ist, daß auf dem Basiskörper (4) zentral drei Kugeln in einer Ebene angeordnet sind und daß die Kugel des Kippkörpers (14) durch die Kugeln des Basiskörpers gelagert ist

7. Kippvorrichtung nach einem der Ansprüche 1 - 6, **dadurch gekennzeichnet, daß** in der Kippvorrichtung ein Positionsmeßsystem (8, 9) enthalten ist.

8. Kippvorrichtung nach Anspruch 7, **dadurch gekennzeichnet, daß** das Positionsmeßsystem aus mindestens einem Hallsensor (9) und mindestens einem Dauermagneten (8) aufgebaut ist.

9. Kippvorrichtung nach Anspruch 8, **dadurch gekennzeichnet, daß** der Dauermagnet (8) am Kippkörper (14) befestigt ist.

## Claims

1. Tilting apparatus, which allows tilting about at least one axis, having a tilting body (14), a base body (4) and a mounting (3a, 3b, 3c, 3d) which is located between these two bodies, with the centre of gravity of the tilting body (14) being located at the rotation point of the mounting, and with the tilting body (14) and the base body (4) being magnetically prestressed, **characterized in that** the tilting body has at least two inclined surfaces with incorporated permanent magnets which interact with soft-magnetic plates (17a, 17b), which are provided on inclined surfaces of the base body (4), in order to prestress the mounting, and are arranged so as to prevent rotation about the Z-axis, which is at right angles to at least one tilting axis.

2. Tilting apparatus according to Claim 1, **characterized in that** the base body (4) is in the form of a slotted tubular sleeve, **in that** the tilting body (14) has two skirt bodies (2a, 2b) which project into the slot in the tubular sleeve of the base body (4), and **in that** a drive device has a magnet (7c) which is fitted to the skirt bodies (2a, 2b).

3. Tilting apparatus according to Claim 2, **characterized in that** the magnet (7c) is a permanent magnet.

4. Tilting apparatus according to Claim 3, **characterized in that** a coil (5) is provided as the drive apparatus on the base body (4).

5. Tilting apparatus according to one of Claims 1-4, **characterized in that** three balls (3b, 3c, 3d) are arranged in a plane centrally thereon with respect to the mounting of the tilting body (14), **in that** one ball (3a) is arranged centrally on the base body (4), and **in that** the ball (3a) of the base body (4) is supported by the balls (3b, 3c, 3d) of the tilting body (14).

6. Tilting apparatus according to one of Claims 1-4, **characterized in that** a ball is arranged centrally thereon with respect to the mounting of the tilting body (14), **in that** three balls are arranged in a plane centrally on the base body (4), and **in that** the ball of the tilting body (14) is supported by the balls of the base body.

7. Tilting apparatus according to one of Claims 1-6, **characterized in that** the tilting apparatus contains a position measurement system (8, 9).

8. Tilting apparatus according to Claim 7, **characterized in that** the position measurement system is formed from at least one Hall sensor (9) and from at least one permanent magnet (8).

9. Tilting apparatus according to Claim 8, **characterized in that** the permanent magnet (8) is attached to the tilting body (14).

## Revendications

1. Dispositif de basculement permettant un basculement autour d'au moins un axe, comprenant un corps basculant (14), un corps de base (4) et un montage (3a, 3b, 3c, 3d) interposé entre ces deux corps, dispositif dans lequel le barycentre du corps basculant (14) se situe dans le pivot du montage et le corps basculant (14) et le corps de base (4) sont mis en précontrainte par aimantation, **caractérisé en ce que** le corps basculant présente au moins deux faces obliques avec des aimants permanents encastrés coopérant avec des plaques (17a, 17b) magnétiques douces qui sont prévues sur des faces obliques du corps de base (4) pour mettre le montage en précontrainte et qui sont placées de façon à ce qu'une rotation autour de l'axe Z perpendiculaire à l'axe de basculement, au moins un, soit empêchée.

2. Dispositif de basculement selon la revendication 1, **caractérisé en ce que** le corps de base (4) adopte la forme d'une douille tubulaire fendue, **en ce que** le corps basculant (14) présente deux jupes (2a, 2b) qui s'avancent dans les fentes de la douille tubulaire du corps de base (4), et **en ce qu'**un dispositif d'entraînement présente un aimant (7c) disposé sur les jupes (2a, 2b).

3. Dispositif de basculement selon la revendication 2, **caractérisé en ce que** l'aimant (7c) est un aimant permanent.

4. Dispositif de basculement selon la revendication 3, **caractérisé en ce qu'**on prévoit, comme dispositif d'entraînement, une bobine (5) sur le corps de base (4).

5. Dispositif de basculement selon l'une des revendications 1 - 4, **caractérisé en ce qu'**en vue du montage du corps basculant (14), trois billes (3b, 3c, 3d) sont placées dans un plan de manière centrale par rapport à celui-ci, **en ce qu'**une bille (3a) est placée de manière centrale sur le corps de base (4) et **en ce que** la bille (3a) du corps de base (4) est soutenue par les billes (3b, 3c, 3d) du corps basculant (14).

6. Dispositif de basculement selon l'une des revendications 1 - 4, **caractérisé en ce qu'**en vue du montage du corps basculant (14), on a disposé une bille de manière centrale sur celui-ci, **en ce que** trois billes sont disposées de manière centrale dans un plan sur le corps de base (4) et **en ce que** la bille du corps basculant (14) est soutenue par les billes du corps de base.

7. Dispositif de basculement selon l'une des revendications 1 - 6, **caractérisé en ce que** le dispositif de basculement comprend un système de mesure de position (8, 9).

8. Dispositif de basculement selon la revendication 7, **caractérisé en ce que** le système de mesure de position est constitué par au moins un capteur à effet Hall (9) et au moins un aimant permanent (8).

9. Dispositif de basculement selon la revendication 8, **caractérisé en ce que** l'aimant permanent (8) est fixé au corps basculant (14).
